**Europäisches Patentamt**

(19) **European Patent Office**

**Office européen des brevets**

(11) Publication number: **0 120 334**
**B1**

(12) **EUROPEAN PATENT SPECIFICATION**

(45) Date of publication of patent specification: **06.12.89**

(51) Int. Cl.⁴: **G 06 K 9/34**

(21) Application number: **84102139.7**

(22) Date of filing: **29.02.84**

(54) Letter pitch detection system.

(30) Priority: **01.03.83 JP 33068/83**
**01.03.83 JP 33076/83**

(43) Date of publication of application:
**03.10.84 Bulletin 84/40**

(45) Publication of the grant of the patent:
**06.12.89 Bulletin 89/49**

(84) Designated Contracting States:
**DE IT NL**

(56) References cited:
**EP-A-0 113 119**
**US-A-3 219 974**
**US-A-3 526 876**

**IBM TECHNICAL DISCLOSURE BULLETIN, vol.
14, no. 10, March 1972, pages 3104-3107, New
York, US; R.J. BAUMGARTNER: "Character
pitch determination"**

(73) Proprietor: **NEC CORPORATION**
**33-1, Shiba 5-chome, Minato-ku**
**Tokyo 108 (JP)**

(72) Inventor: **Tsuji, Yoshitake**
**NEC Corporation 33-1, Shiba 5-chome**
**Minato-ku Tokyo (JP)**

(74) Representative: **Vossius & Partner**
**Siebertstrasse 4 P.O. Box 86 07 67**
**D-8000 München 86 (DE)**

(56) References cited:
**IBM TECHNICAL DISCLOSURE BULLETIN, vol.
14, no. 9, February 1972, pages 2643-2644, New
York, US; R.J. BAUMGARTNER: "Iterative
segmentation"**

## Description

The present invention relates to a letter pitch detection system which automatically detects the letter pitch for individually segmenting aligned letter images on a paper surface.

In order to recognize a series of letters in an optical character recognizing (OCR) system, it is necessary to separate the letters from each other. Information necessary for dividing the letters from each other includes the letter pitch. The letter pitch can be given in advance if the size or kind of printed matter being read by the OCR system is known. However, the documents to be handled by OCRs have widened in recent years to a range which includes postal matter and documents of indefinite letter pitch, so it is often impossible to know the letter pitch in advance. This makes it necessary to estimate the letter pitch from the aligned letter images on the paper surface.

In the estimation of letter pitch according to the prior art ("A Character Extraction Method from Free Formal Printed Documents", Article No. PRL80-70 by Teruo Akiyama and Isao Masuda, Musashino Electrical Communication Laboratory, N.T.T., Institute of Electronics and Communication Engineers of Japan, 1980), information which is extracted from the paper surface and which provides the letter width relating to one letter image, for example, the mean letter pitch, is used. When, however, the widths of each of the letters differs according to the font or category of the letters, as is the case with Arabic or English printed letters, an error which cannot be ignored is generated when the letters are being separated, between the mean letter pitch and the actual letter pitch. When, therefore, aligned letter images containing several letters touching or merging with each other are separated by the use of this mean letter pitch, the number of separated such merged letters may be misjudged, or they may be separated by inaccurate dividing lines.

From IBM Technical Disclosure Bulletin, vol. 14, no. 10, March 1972, pages 3104—3107, New York, US, R. J. Baumgartner: "Character Pitch Determination" it is known to discard large merged blocks having more than one character when calculating pitch.

A letter pitch detection system and method as set out under a) to g) of Claims 1 and 8 is known from EP—A—0 113 119 which falls under Article 54(3) EPC.

It is, therefore, an object of this invention to provide a letter pitch detection system capable of accurately detecting a letter pitch in letter images containing several letters touching or merging with each other.

It is another object of this invention to provide a letter segmenting apparatus capable of effectively segmenting letters in a letter group.

The above objects are achieved by the features of the claims.

The letter pitch detection system particularly comprises: means for successively extracting a plurality of letter images (which will be called "letter blocks") separatable by white background from the series of aligned letter images, and for detecting the locations and heights of the letter blocks; a frequency table for storing frequency information on each letter block; means for calculating a mean height from a plurality of letter block heights and for setting a permissible range for one letter width; most frequent letter width detection means for detecting the most frequent letter block width within the permissible range of one letter width, with reference to the frequency information in said frequency table; effective interval extraction means for detecting an interval of one letter width (which will be called "effective interval" hereinafter) which is effective for estimating a letter pitch Ps, on the basis of the most frequent letter width referring to the frequency table; letter block width extraction means for rescanning the series of letter images to detect a group of the letter blocks that are deemed to be a series of one-letter blocks, in terms of said effective interval and the permissible space width set by the effective interval, to detect the sums of the number of letters (which will be called "the number of connected blocks" hereinafter) in the letter group, the widths of the letter blocks, and the space widths between the letter block widths (which will be called "space widths" hereinafter); and letter pitch estimation means for calculating the maximum likelihood estimation of letter pitch on the basis of both the sums obtained for each of different numbers of connected blocks, and the number of sums (which will be called "the number of samples" hereinafter).

The features and advantages of this invention will be understood from the following detailed description of a preferred embodiment of this invention taken in conjunction with the accompanying drawings, wherein:

Figure 1 shows one example of aligned letter images to which this invention is applied;

Figure 2 shows one example of the frequency distribution of letter block widths;

Figure 3 is a block diagram of a first embodiment of the present invention;

Figure 4 is a block diagram of the initial one-letter width class data extraction means 5 in the embodiment shown in Figure 3;

Figure 5 is a block diagram of the letter block extraction means 11 in the first embodiment shown in Figure 3; and

Figure 6 is a block diagram of the letter pitch estimation means 13 in the first embodiment shown in Figure 3.

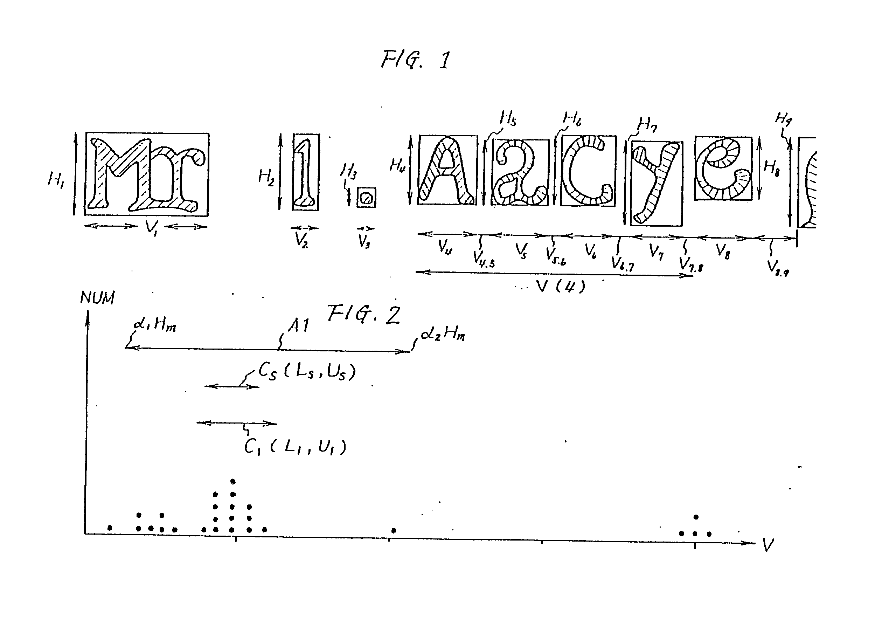

Figure 1 shows an example of a group of aligned letter images to which the present invention is applied. In Figure 1, each letter block, i.e., each letter image shown hatched, and which can be separated by

2

EP 0 120 334 B1

white background, is surrounded by a rectangle. The characters Vi and Hi (i=1 .... 9) indicate the width and height of each letter block.

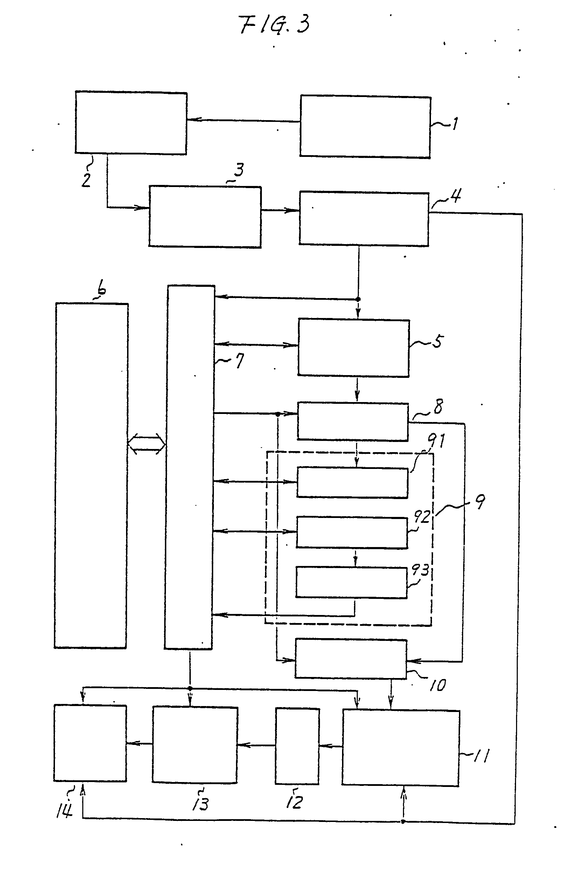

The principle of the present invention will now be summarized with reference to Figure 1. The locations, heights and widths of a series of letter blocks are detected, and an effective one-letter width interval, effective for estimating the letter pitch, is determined on the basis of the frequency distribution (shown in Figure 2) of the widths of the series of letter blocks. For the letter blocks within that effective interval, the sum $V(k)$ of the letter block widths and the space widths of a number of connected blocks k are determined (e.g., the widths $V_4$, $V_5$, $V_6$ and $V_7$ and the space widths ($V_{4,5}$, $V_{5,6}$, $V_{6,7}$ and $V_{7,8}$ in Figure 1, for k=4 connected blocks, given $V(4)$). The letter block widths and the space widths of the number of connected blocks k are determined from the letter block widths and the space widths of the first to k-th blocks if the (k+1)th space width $V_{k+1, k+2}$ (which corresponds to $V_{8,9}$ in Figure 1), which is determined by the position of the (k+2)th letter block and by the position and width of the (k+1)th letter block, is larger than a permissible space width determined by a method which will be described later.

Incidentally, when a letter width is obtained which is effective for estimating the pitch of an isolated letter, but which cannot provide a number k (where k≧1) of connected letter blocks by the above method, e.g., the letter block width $V_8$ in Figure 1, the letter block width can also be detected as the sum $V(1)$ for k=1.

In this way, a most appropriate letter pitch Ps is estimated on the basis of the sum $V(k)$ of a number of samples $n(k)$ obtained for each of different numbers of connected blocks k. The value $1/k \cdot V(k)$ will be called the "estimated one-letter width" hereinafter, and the mean value of the sums of the number of samples $n(k)$ will be called sum $\overline{V}(k)$. The characteristics of the estimated one-letter width $1/k \cdot \overline{V}(k)$ using the sum $\overline{V}(k)$ will now be briefly described. Since the sum $\overline{V}(k)$ considers the spacing between the widths of the adjoining letters, i.e., the space width, the error between the estimated one-letter width $1/k \cdot \overline{V}(k)$ and the letter pitch Ps is reduced as the number of connected blocks and the number of samples $n(k)$ become larger, so that it provides a satisfactory estimation of the letter pitch Ps.

In this simple method of obtaining an estimate of the letter pitch Ps, therefore, it is possible to obtain, as the estimated value of the letter pitch Ps, an estimated one-letter width

$$\frac{1}{MAX(k)} \cdot \overline{V}(MAX(k))$$

which is obtained by dividing the sum $\overline{V}(MAX(k))$ by the maximum value $MAX(k)$ of the number of connected blocks (k). For a more accurate estimation of the letter pitch Ps, on the other hand, the best linear estimation of the letter pitch Ps can be obtained by calculating the value of:

$$\sum_{i=1}^{I} w(ki, n(ki)) \cdot \frac{\overline{V}(ki)}{ki}$$

on the basis of the sum $\overline{V}(ki)$ which is obtained for I different numbers of connected blocks ki, and the number of connected blocks ki (where i=1 .... I).

The coefficient $w(ki, n(ki))$ is determined by the number of connected blocks k and the number of samples $n(k)$, and is obtained from, for example:

$$ki \cdot \sqrt{n(ki)} / \sum_{i=1}^{I} ki \cdot \sqrt{n(ki)}.$$

The estimated letter pitch can of course be easily calculated by means of adders, multipliers and dividers. By changing the order of the adders, multipliers and dividers, moreover, it is possible to reduce the calculation time and error. However, the coefficient $w(ki, n(ki))$ need not be used, an estimate expressed by a linear sum could be used instead.

Figure 2 shows an example of the frequency distribution of letter block widths on the paper surface, as shown in Figure 1. In Figure 2, the abscissa V of the frequency distribution of a plurality of letter block widths indicates the letter block width V, and the ordinate NUM indicates the frequency of any value of letter block width.

In the present invention, therefore, the plurality of letter block widths effective for estimating the letter pitch Ps on a frequency distribution basis can be determined in the following manner. First a letter block width A1 which can provide one letter is determined from the frequency distribution shown in Figure 2. The interval A1 can be set from the mean height $H_m$ of a plurality of letter block heights $H_1$, $H_2$, ..., of Figure 1, and coefficients $\alpha_1$ and $\alpha_2$ ($\alpha_1 < \alpha_2$).

The mean height $H_m$ could be calculated as a mean height within a predetermined interval by setting upper and lower height limits on the basis of the maximum of a plurality of letter heights. Next, by determining an interval Cs containing a maximum frequency for a predetermined permissible width $\Delta\tau$ ($\Delta\tau=3$ in Figure 2) within the interval A1, and by renewing the upper limit Us in the upward direction,

3

starting from the interval Cs, with reference to the frequency distribution, upper and lower limits to the effective interval $C_1$ of the letter block width effective for estimating the letter pitch Ps become $U_1$ and $L_1$, respectively. The lower limit $L_1$ can be removed if it is not renewed from the lower limit Ls of the section Cs by the use of the frequency distribution, if there is an extremely narrow letter such as "I", a period, or a single letter divided into two, for example, in Arabic or European printed characters. When the letter width fluctuates only a little, the lower limit Ls may be renewed starting from the interval Cs in the downward direction with reference to the frequency distribution, so that the number of letter block widths belonging to the effective interval $C_1$ can be increased to increase the reliability of the estimate.

Referring to Figure 3, a scanner 1 optically scans the aligned letter images on the paper surface to convert the images into electrical signals and quantize the signals into binary signals, which are written into an aligned letter image memory 2. A letter block extractor 3 successively extracts letter blocks from the plurality of aligned letter images stored in the aligned letter image memory 2 and supplies the locations and sizes of each of the letter blocks to a letter block register 4. The size of a letter block means its width and height. The letter block extractor 3 is disclosed in JP—A—141779/82.

The plurality of letter block widths stored in the letter block register 4 are supplied successively to a controller 7. The controller 7 converts the letter block widths into addresses of a frequency table 6 composed of a memory, and reads out and increments the contents of the frequency table 6 corresponding to the converted addresses and rewrites the incremented contents into the same addresses of the frequency table 6. Thus, the frequency of each letter block width V extracted from the aligned letter image memory 2 is stored in address V of the frequency table 6. As a result, a frequency distribution of the letter block widths, as shown in Figure 2, is stored in the frequency table 6.

The frequency table 6 has been first initialized to 0. The controller 7 determines the mean value Hm of the letter block heights stored in the letter block register 4, and sends it to an initial one-letter width class data extraction means 5. The data extraction means 5 determines the interval Cs (Ls, Us), from the frequency table 6 within the range ($\alpha_1$Hm to $\alpha_2$Hm) set by the mean letter block width Hm, which contains the most frequent value with the predetermined permissible width $\Delta\tau$, as shown in Figure 2. The upper and lower limits Us and Ls are stored as initial data in an initial data register 8.

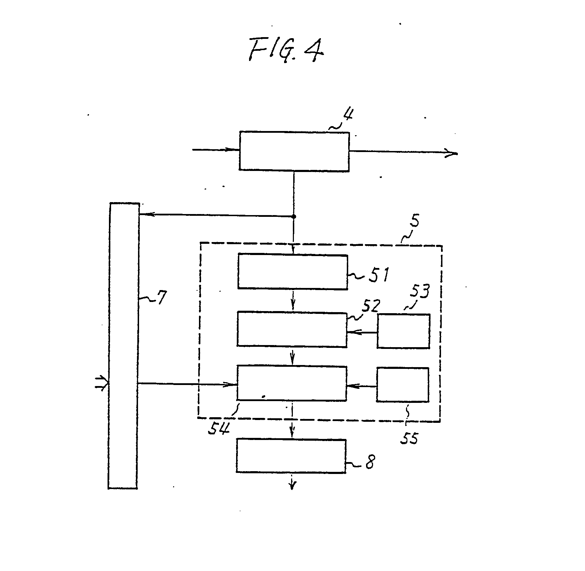

Referring to Figure 4, the data extraction means 5 comprises an average height detector 51, a multiplier 52, a constant register 53, a most frequently appeared width detector 54 and a constant register 55.

The height data of the plurality of letter blocks stored in the register 4 are sequentially transferred to an average-height detector 51. The average-height detector 51 calculates an average-value Hm in the height of the plurality of letter blocks. The detector 51 may be of a circuit for producing as the average height the most frequently appeared height. The average height data Hm is supplied to a multiplier 52 which is also supplied with constants $\alpha_1$ and $\alpha_2$ ($\alpha_1 < \alpha_2$) from a constant register 53, and calculates values $\alpha_1$Hm, and $\alpha_2$Hm. The values $\alpha_1$Hm and $\alpha_2$Hm are supplied as lower limit and upper limit of a width range for a possible one-character to a most-frequency appeared width detector 54 which is also supplied with a constant $\Delta\tau$ from a constant register 55. The detector 54 counts the frequency values at an interval $\Delta\tau$ to detect the lower and upper limit values Ls and Us representative of the most-frequently appeared width range.

An effective letter block width detection means 9 detects the effective interval of the letter block width which is effective for detecting the letter pitch Ps. The effective letter block width detection means 9 sets the upper limit Us stored in the initial data register 8 in a counter 91, and increments it by 1. After the frequency corresponding to the block width, the content of the counter 91, is read out from the frequency table 6 by the controller 7 and is stored in a frequency register 92, a zero detector 93 judges whether or not that frequency is zero. When the zero detector 93 judges that the content of the frequency register 92 is zero, the content of the counter 91 becomes the upper limit $U_1$ of the effective letter block width and is set in a register 10. On the other hand, when the zero detector 93 judges that the content of the frequency register 92 is not zero, the counter 91 is incremented by 1. These operations are repeated.

Incidentally, it is assumed that the lower limit $L_s$ which is the content of the initial data register 8 is not renewed by the controller 7, but is set as the lower limit $L_1$ of the effective letter block width in the register 10. It goes without saying that the effective letter block width detection means 9 could increment the upper value $U_s$ stored in the initial data register 8 and, while referring to the frequency table 6, detect the letter width at which the letter block width frequency is a minimum as the upper limit $U_1$ of the effective interval.

A letter block width extraction means 11 detects the sum V(k) of the letter block widths $V_1$, $V_2$ ... within the effective interval of a number of connected blocks k (where $k \geqq 2$) and the space widths $V_{1,2}$, $V_{2,3}$, ... and $V_{k,k+1}$ and successively stores the sum V(k) for each of a number of samples n(k) extracted for each of the number of connected blocks k in an observation table 12. A letter pitch estimation means 13 determines the most suitable estimate of the letter pitch Ps on the basis of the sums V(k) for the number of samples n(k), which are extracted for each number of connected blocks k successively stored in the observation table 12.

The letter pitch estimation means 13 can be realized by a simple circuit which is composed of a maximum detector and a mean value calculator. More specifically, the sum V(MAX(k)) containing the longest number of connected blocks MAX(k) is detected from the observation table 12 by the maximum detector, and the mean sum $\overline{V}$(MAX(k)) of the sums V(MAX(k)) of the number n(MAX(k)) extracted is detected as the estimate of the letter pitch Ps by the mean value calculator.

A one-letter segmenting means 14 separates the text into one-letter units by a known technique, on the

4

basis of both the letter pitch Ps obtained by the letter pitch estimation means 13, and the locations and sizes of the letter blocks stored in the letter block register 4.

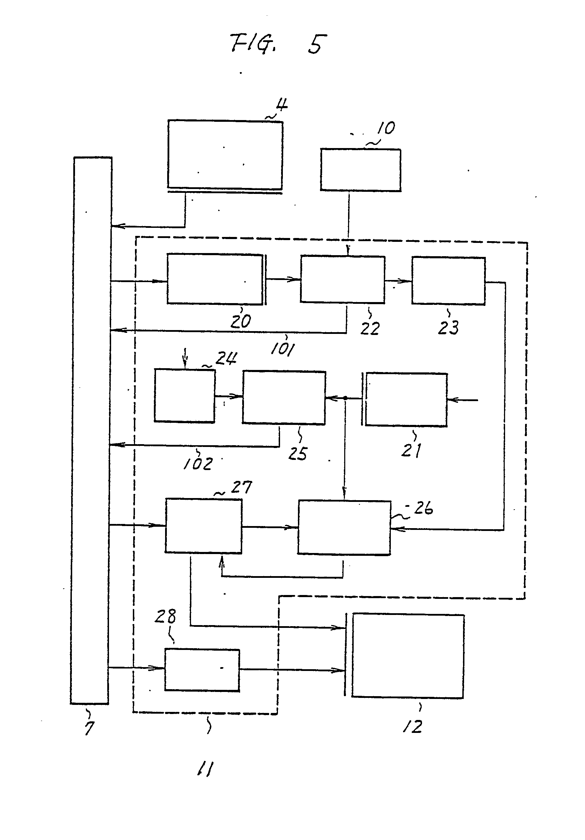

Referring to Figure 5, the controller 7 stores the series of letter block widths $V_1$, $V_2$ ... stored in the letter block register 4 in a register 20 in the order in which they were extracted. The space widths $V_{1,2}$, $V_{2,3}$ ... are calculated on the basis of the widths and locations of the series of letter blocks, and are successively stored in a register 21. A comparator 22 examines whether or not a letter block width Vi (where i designates the extraction order) successively transferred by the controller 7, and which is stored in the register 20, lies within the effective interval stored in the register 10. If the letter block width Vi is within the effective interval, a letter block detection signal 101s is set to "1", and the letter block width Vi is stored in the register 23. Otherwise the letter block detection signal 101s is set to "0" (the signals on signal lines are designated in the diagram by suffixing letter "s" to the numerals indicating the signal lines). If the letter block detection signal 101s is "1", the controller 7 transfers the corresponding space width $V_{i,i+1}$ stored in a register 21 to a comparator 25.

It is assumed that a predetermined permissible space width is preset in a permissible value register 24 by the controller 7, on the basis of the content of the initial data register 8 set by the initial one-letter width class data extraction means 5 (Figure 3). The content of the permissible value register 24 is used to detect whether there is punctuation for a word, etc., formed by a blank of one or more letters. When the letter block detection signal 101s is "1", the space width $V_{i,i+1}$ stored in the register 21 is sent to the comparator 25 by the controller 7. The comparator 25 compares the content of the permissible value register 24 and the space width $V_{i,i+1}$, and sets a punctuation detection signal 102s to "1" if the space width $V_{i,i+1}$ is less than the content of the permissible value register 24, or sets the punctuation detection signal 102s to "0" if the space width $V_{i,i+1}$ is more than the content of the permissible value register 24.

When the punctuation detection signal 102s is "1", the space width $V_{i,i+1}$ stored in the register 21 and the letter block width Vi stored in the register 23 are sent to an adder 26 by the controller 7. The adder 26 adds the letter block width Vi, the space width $V_{i,i+1}$, and the content of a sum register 27, and stores the result back in the sum register 27. The sum register 27 is initially set at "0". A connected-block counter 28 is incremented by 1 by the controller 7 when a letter block width within the effective interval is detected as a result of the letter block detection signal 101s becoming "1". The connected-block counter 28 is initially set at "0". The operations thus far described are conducted until either the letter block detection signal 101s or the punctuation detection signal 102s becomes "0".

Next, when the letter block detection signal 101s is "0", it is interpreted that a letter block width which is not within the effective interval has been detected. The controller 7 stores the contents of the connected-block counter 28 and the sum register 27 in the observation table 12, and resets the content of the counter 28. If the content of the counter 28 is "0", the setting of the observation table 12 is not effected.

If the punctuation detection signal 102s is "0", on the other hand, it is interpreted that a space between words has been detected. The controller 7 decrements the connected-block counter 28 by 1, then stores the contents of the connected-block counter 28 and the sum register 27 in the observation table 12 and resets the content of the counter 28.

If the punctuation detection signal 102s is "0" and the connected-block counter 28 is "1", the letter block width or the content of the register 23 and the content (which is "1") of the connected-block counter 28 could also be stored in the observation table 12 by the controller 7.

The operations thus far described are conducted for each of the letter block widths successively stored in the register 20.

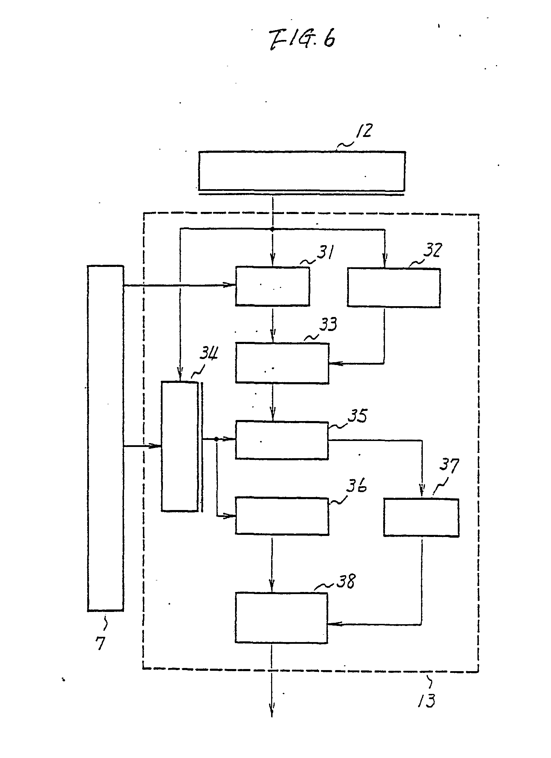

The letter pitch estimation means 13 will be described with reference to Figure 6. It is assumed that the observation table 12 holds the sum V(ki) of the number of samples n(ki) for each of I different numbers of connected blocks ki (i=1 ... I) by the action of the k letter pitch extraction means 11; and that the number of samples n(ki) is counted and stored in a predetermined area of the observation table 12 by the controller 7 when the sums V(ki) of the numbers of connected blocks ki are successively set. At first, the number of connected blocks ki and the number of samples n(ki) in the observation table 12 are sent in succession to an integrator 31, and at the same time the n(ki) sums V(ki) in the observation table containing the numbers of connected blocks ki are sent to an adder 32. The integrator 31 determines the product $ki \cdot n(ki)$ of the number of connected blocks ki and the number of samples n(ki), and transfers the product to a divider 33. The adder 32 adds the n(ki) sums V(ki), and the divider 33 divides the n(ki) sums V(ki) by the product $ki \cdot n(ki)$ and sends the estimated one-letter width $1/ki \cdot \overline{V}(ki)$ (where $\overline{V}(ki)$ is the mean sum of the number of samples n(ki)), obtained for the number of connected blocks ki to an integrator 35.

Reference numeral 34 indicates a coefficient table in which are stored the coefficient $\alpha$ (ki, n(ki)) determined for each number of connected blocks ki and number of samples n(ki). As an example, the coefficients can be determined to be $ki\sqrt{n(ki)}$ for each number of connected blocks ki and number of samples n(ki). When the estimated one-letter width

$$\frac{1}{ki} \cdot \overline{V}(ki)$$

obtained from the number of connected blocks ki and the number of samples n(ki) is sent to the integrator 35, the coefficient w(ki, n(ki)) is read out of the coefficient table 34 to the integrator 35, and is simultaneously sent to a coefficient adder 36. The integrator 35 calculates each product of the coefficient α (ki, n(ki)) and the estimated one-letter width $1/ki \cdot \overline{V}(ki)$ obtained from the number of connected blocks ki, and sends the result to an adder 37. The adder 37 calculates the sum

$$\sum_{i=1}^{I} \alpha(ki, \, n(ki)) \cdot \frac{1}{ki} \cdot \overline{V}(ki)$$

of the estimated one-letter widths

$$\alpha(ki, \, n(ki)) \cdot \frac{1}{ki} \cdot \overline{V}(ki),$$

which is weighed and obtained from the I different numbers of connected blocks ki sent in succession, and sends the calculated sum to a divider 38.

On the other hand, the coefficient adder 36 calculates the sum

$$\sum_{i=1}^{I} \alpha(ki, \, n(ki))$$

of the I coefficients α (ki, n(ki)) sent in succession, and sends the calculated sum to the divider 38. The divider 38 divides the output from the adder 37, i.e.,

$$\sum_{i=1}^{I} \alpha(ki, \, n(ki)) \cdot \frac{1}{ki} \cdot \overline{V}(ki),$$

by the output from the coefficient adder 36, i.e., the I coefficients

$$\sum_{i=1}^{I} \alpha(ki, \, n(ki)),$$

so that a linear estimated value of the letter pitch Ps is obtained in the following form:

$$\frac{1}{\displaystyle\sum_{i=1}^{I} \alpha(ki, \, n(ki))} \cdot \sum_{i=1}^{I} \alpha(ki, \, n(ki)) \cdot \frac{1}{ki} \cdot \overline{V}(ki)$$

In the letter pitch estimation means 13, the number of divisions for the coefficients w(ki, n(ki)) is reduced when providing the best linear estimated value

$$\sum_{i=1}^{I} w(ki, \, n(ki)) \cdot \frac{1}{ki} \cdot \overline{V}(ki),$$

to illustrate the principle of the present invention with reference to Figure 1. Since the estimated one-letter width

$$\frac{1}{ki} \cdot \overline{V}(ki)$$

is determined independently of the coefficient w(ki, n(ki)), more specifically, the letter pitch estimation means 13 makes use of the characteristics of the following equation:

$$w(ki, \, n(ki)) = \alpha(ki, \, n(ki)) \, / \, \sum_{i=1}^{I} \alpha(ki, \, n(ki)).$$

Thus, if it is necessary to reduce the number of divisions while still emphasizing the processing time and the calculation accuracy, according to the hardware elements used, so as to determine this best linear estimated value, it goes without saying that each division calculation of the sum V(ki) by the number of samples n(ki) and the number of connected blocks ki can be conducted not initially but finally.

As has been described hereinbefore, according to the present invention the letter pitch can be easily and accurately measured, even if the letter pitch is not known in advance or the text contains letter images in which letters merge with each other or are divided.

**Claims**

1. A letter pitch detection system for scanning a series of aligned letter images on a paper surface to extract a letter pitch for separating said series of aligned letter images into one-letter units, comprising:

a) means (1) for producing a binary letter image having white the black bits by scanning said series of aligned letter images;

b) means (3) responsive to said binary letter image for extracting letter blocks which are surrounded by said white bits;

c) means responsive to said letter blocks for generating height data and width data for said letter blocks; and

d) means (6) for storing frequency information with respect to said width data;

e) means (7) responsive to said height data for providing an average height data;

f) means (5) responsive to said average height data for providing a possible range (Al) of the letter-block width in which a one-letter can exist;

g) means (9) responsive to said frequency information stored in said storing means (6) for determining upper and lower limit values of a width range (Cs or Cl) lying within said possible range (Al) of the letter block, with reference to the distribution of said frequency information;

h) letter block width extraction means (11) for detecting a series of said letter blocks which is deemed to include a plurality of one-letter blocks and spaces between said one-letter blocks, in terms of said width range and a permissible space width determined on the basis of said width range, the width of each of said letter blocks within said series lying within said width range, the width of each of said spaces within said series lying within said permissible space width, said letter block width extraction means (11) including means (28) for obtaining a number of letters contained in said series of said letter blocks and means (27) for obtaining a sum of the widths of said letters blocks and said spaces within said series of said letter blocks; and

i) letter pitch estimation means (13) for conducting a maximum likelihood estimation of a letter pitch from said sum of said widths and said number of letters, said letter pitch being calculated as the mean of the letter pitches of said series of said letter blocks extracted by said letter block width extraction means (11).

2. A letter pitch detection system according to claim 1, wherein the mean of the letter pitches according to feature i) is a weighed mean of the extracted blocks.

3. A letter pitch detection system according to claim 1, wherein the mean of the letter pitches according to feature i) is a weighed mean in which only the maximum value obtained is taken into account.

4. System according to any of claims 1 to 3, characterized in that the letter block extracting means (3—8) comprises data extraction means (5) comprising an average height detector (51), a multiplier (52), a constant register (53), a most frequently appeared width register (50), and a constant register (55).

5. System according to any of claims 1 to 4, characterized in that the effective interval detection means (9) comprises a counter (91), a frequency register (92), and a zero detector (93).

6. System according to any of claims 1 to 5, characterized in that the letter block width extraction means (11) comprises registers (20, 21, 23, 24, 27), comparators (22, 25), an adder (26), and a counter (28).

7. System according to any of claims 1 to 6, characterized in that the letter pitch estimation means (13) comprises integrators (31, 35), adders (32, 36, 37), dividers (33, 38), and a coefficient table (34).

8. A letter pitch detection method for scanning a series of aligned letter images on a paper surface to extract a letter pitch for separating said series of aligned letter images into one-letter units, particularly with a system according to any of claims 1 to 7, comprising the steps of

a) producing a binary letter image having white and black bits by scanning said series of aligned letter images;

b) extracting letter blocks which are surrounded by said white bits in response to said binary letter image;

c) generating height data and width data for said letter blocks in response to said letter blocks; and

d) storing frequency information with respect to said width data;

e) providing an average height data in response to said height data;

f) providing a possible range (Al) of the letter-block width in which a one-letter can exist in response to said average height data;

g) determining upper and lower limit values of a width range (Cs or Cl) lying within said possible range (Al) of the letter block, with reference to the distribution of the frequency information in response to said stored frequency information;

h) detecting a series of said letter blocks which is deemed to include a plurality of one-letter blocks and spaces between said one-letter blocks, in terms of said width range and a permissible space width determined on the basis of said width range, the width of each of said letter blocks within said series lying within said width range, the width of each of said spaces within said series lying within said permissible space width, by obtaining a number of letters contained in said series of letter blocks and by obtaining a sum of the widths of said letter blocks and said spaces within said series of said letter blocks; and

i) conducting a maximum likelihood estimation of a letter pitch from said sum of said widths and said number of letters, said letter pitch being calculated as the mean of the letter pitches of said series of said detected letter blocks.

## Patentansprüche

1. System zum Erfassen eines Zeichenabstands, wobei eine Folge von ausgerichteten Zeichenabbildungen auf einer Papierfläche abgetastet wird, so daß ein Zeichenabstand gewonnen wird zum Trennen der Folge von ausgerichteten Zeichenabbildungen in Einzeichen-Einheiten mit:

a) einer Einrichtung (1) zum Erzeugen einer binären Zeichenabbildung mit weißen und schwarzen Bits mittels Abtasten der Folge von ausgerichteten Zeichenabbildungen,

b) einer Einrichtung (3), die auf die binären Zeichenabbildungen anspricht, zum Gewinnen von Zeichenblöcken, die von weißen Bits umgeben sind,

c) einer Einrichtung, die auf die Zeichenblöcke anspricht, zum Erzeugen von Höhendaten und Breitendaten für die genannten Zeichenblöcke,

d) einer Einrichtung (6) zum Speichern von Frequenzinformationen in Bezug auf die Breitendaten,

e) einer Einrichtung (7), die auf die Höhendaten anspricht, zum Bereitstellen von durchschnittlichen Höhendaten,

f) einer Einrichtung (5), die auf die durchschnittlichen Höhendaten anspricht, zum Bereitstellen eines möglichen Bereichs (AI) der Zeichenblockbreite, in der ein Einzeichen vorhanden sein kann,

g) einer Einrichtung (9), die auf die in den Speichereinrichtungen (6) gespeicherten Frequenzinformationen anspricht, zum Bestimmen von oberen und unteren Grenzwerten eines Breitenbereichs (Cs oder Cl), die innerhalb des möglichen Bereichs (AI) des Zeichenblocks liegen, mit Bezug auf die Verteilung der Frequenzinformationen,

h) einer Einrichtung (11) zum Gewinnen der Zeichenblockbreite zum Erkennen einer Folge von Zeichenblöcken, die voraussichtlich mehrere Einzeichenblöcke und Abstände zwischen diesen Einzeichenblöcken aufweist, ausgedrückt als der Breitenbereich und eine zulässige Abstandsbreite, die auf der Basis des Breitenbereichs bestimmt wird, wobei die Breite jedes Zeichenblocks innerhalb der Folge in dem Breitenbereich liegt, die Breite jedes der Abstände innerhalb der Folge in der zulässigen Abstandsbreite liegt, die Einrichtung (11) zum Gewinnen der Zeichenblockabstände eine Einrichtung (28) zum Erhalten einer Anzahl von Zeichen, die in der Folge von Zeichenblöcken enthalten sind, und eine Einrichtung (27) aufweist, zum Erhalten einer Summe der Breiten der Zeichenblöcke und der Abstände innerhalb der Folge von Zeichenblöcken, und

i) einer Zeichenabstand-Schätzeinrichtung (13) zum Durchführen einer Schätzung einer größten Wahrscheinlichkeit eines Zeichenabstands aus der Summe der Breiten und der Anzahl der Zeichen, wobei der Zeichenabstand berechnet wird als der Mittelwert der Zeichenabstände der Folge von Zeichenblöcken, die von der Zeichenblockbreite - Gewinnungseinrichtung (11) gewonnen werden.

2. Zeichenabstand-Erfassungssystem nach Anspruch 1, wobei der Mittelwert der Zeichenabstände gemäß dem Merkmal i) ein gewichteter Mittelwert der gewonnenen Blöcke ist.

3. Zeichenabstand-Erfassungssystem nach Anspruch 1, wobei der Mittelwert der Zeichenabstände gemäß dem Merkmal i) ein gewichteter Mittelwert ist, wobei nur der erhaltene Maximalwert berücksichtigt wird.

4. System nach einem der Ansprüche 1 bis 3, dadurch gekennzeichnet, daß die Zeichenblock - Gewinnungseinrichtung (3—8) eine Einrichtung (5) zum Gewinnen von Daten mit einem Durchschnittshöhen - Detektor (51), einem Multiplizierer (52), einem Konstantregister (53), einem Register (50) für die am häufigsten auftretende Breite und ein Konstantregister (55) aufweist.

5. System nach einem der Ansprüche 1 bis 4, dadurch gekennzeichnet, daß die Einrichtung (9) zum Erfassen des effektiven Intervalls einen Zähler (91), ein Frequenzregister (92) und ein Nulldetektor (93) aufweist.

6. System nach einem der Ansprüche 1 bis 5, dadurch gekennzeichnet, daß die Einrichtung (11) zum Gewinnen der Zeichenblockbreite Register (20, 21, 23, 24, 27), Vergleicher (22, 25), einen Addierer (26) und einen Zähler (28) aufweist.

7. System nach einem der Ansprüche 1 bis 6, dadurch gekennzeichnet, daß die Zeichenabstand - Schätzeinrichtung (13) Integratoren (31, 35), Addierer (32, 36, 37), Dividierer (33, 38) und eine Koeffiziententabelle (34) aufweist.

8. Verfahren zum Erfassen eines Zeichenabstands, wobei eine Folge von ausgerichteten Zeichenabbildungen auf einer Papierfläche abgetastet wird, so daß ein Zeichenabstand gewonnen wird zum Trennen der Folge von ausgerichteten Zeichenabbildungen in Einzeichen - Einheiten, insbesondere mit einem System nach einem der Ansprüche 1 bis 7, mit den Schritten:

a) Erzeugen einer binären Zeichenabbildung mit weißen und schwarzen Bits durch Abtasten der Folge von ausgerichteten Zeichenabbildungen,

8

b) Gewinnen von Zeichenblöcken, die umgeben sind von weißen Bits als Antwort auf die binäre Zeichenabbildung,

c) Generieren von Höhendaten und Breitendaten für die Zeichenblöcke als Antwort auf die Zeichenblöcke,

d) Speichern von Frequenzinformationen in Bezug auf die Breitendaten,

e) Bereitstellen von durchschnittlichen Höhendaten als Antwort auf die Höhendaten,

f) Bereitstellen eines möglichen Bereiches (AI) der Zeichenblockbreite, in dem ein Einzeichen vorhanden sein kann, als Antwort auf die durchschnittlichen Höhendaten,

g) Bestimmen von oberen und unteren Grenzwerten eines Breitenbereichs (Cs oder CI), der innerhalb des möglichen Bereichs (AI) des Zeichenblocks liegt, mit Bezug auf die Verteilung der Frequenzinformationen als Antwort auf die gespeicherten Frequenzinformationen,

h) Erfassen einer Folge von Zeichenblöcken, die voraussichtlich mehrere Einzeichenblöcke und Abstande zwischen den Einzeichenblöcken aufweisen, ausgedrückt als Breitenbereich und eine zulässige Abstandsbreite, die bestimmt wird auf der Basis des Breitenbereichs, wobei die Breite jedes der Zeichenblöcke innerhalb der Folge in dem Breitenbereich liegt, die Breite jedes der Abstände innerhalb der Folge in der zulässigen Abstandsbreite liegt, durch Erhalten einer Anzahl von Zeichen, die in der Folge der Zeichenblöcke enthalten sind, und durch Erhalten einer Summe der Breiten der Zeichenblöcke und der Abstände innerhalb der Folge der Zeichenblöcke, und

i) Durchführen einer Schätzung auf maximale Wahrscheinlichkeit eines Zeichenabstands aus der Summe der Breiten und der Anzahl der Zeichen, wobei der Zeichenabstand berechnet wird als Mittelwert der Zeichenabstände der Folge der erfäßten Zeichenblöcke.

**Revendications**

1. Système de détection du pas de lettres afin de balayer une série d'images de lettres en alignement sur une surface en papier afin d'extraire un pas des lettres pour séparer la série d'images de lettres en alignement en unités d'une lettre, comprenant:

a) un moyen (1) pour produire une image binaire des lettres ayant des bits blancs et noirs par balayage de la série d'images de lettres en alignment;

b) un moyen (3) répondant à l'image binaire des lettres pour extraire des blocs de lettres qui sont entourés par les bits blancs;

c) un moyen répondant aux blocs de lettres pour produire une donnée sur la hauteur et une donnée sur la largeur pour les blocs de lettres;

d) un moyen (6) pour stocker une information sur la fréquence par rapport à la donnée sur la largeur;

e) un moyen (7) répondant à la donnée sur la hauteur pour fournir une donnée sur la hauteur moyenne;

f) un moyen (5) répondant à la donnée sur la hauteur moyenne pour fournir une gamme possible (AI) de la largeur du bloc de lettres dans laquelle une lettre peut exister;

g) un moyen (9) répondant à l'information sur la fréquence stockée dans le moyen de mémoire (6) afin de déterminer des valeurs des limites supérieure et inférieure d'une gamme de largeur (Cs ou CI) se trouvant dans la gamme possible (AI) du bloc de lettres, par rapport à la distribution de l'information sur la fréquence;

h) un moyen (11) d'extraction de largeur de blocs de lettres afin de détecter une série de blocs de lettres qui est supposée incorporer une multitude de blocs d'une lettre et d'espacements entre les blocs d'une lettre, en termes de gamme de largeur et une largeur d'espacement permise déterminée sur la base de la gamme de largeur, la largeur de chacun des blocs du lettres à l'intérieur de la série se trouvant dans la gamme de largeur, la largeur de chacun des espacements à l'intérieur de la série se trouvant dans la largeur d'espacement permise, le moyen (11) d'extraction de largeur de blocs de lettres comprenant un moyen (28) pour obtenir un certain nombre de lettres contenues dans la série de bloc de lettres et un moyen (27) pour obtenir la somme des largeurs des blocs de lettres et des espacements à l'intérieur de la série des blocs de lettres; et

i) un moyen (13) d'estimation du pas de lettres pour effectuer une estimation de la probabilité maximum d'un pas de lettres à partir de la somme des largeurs et du nombre des lettres, le pas des lettres étant calculé comme la moyenne des pas des lettres de la série des blocs de lettres extraits par le moyen (11) d'extraction de largeur de blocs de lettres.

2. Système de détection du pas de lettres selon la revendication 1, dans lequel la moyenne des pas des lettres selon la caractéristique i) est une moyenne pondérée des blocs extraits.

3. Système de détection du pas de lettres selon la revendication 1 dans lequel la moyenne des pas des lettres selon la caractéristique i) est une moyenne pondérée dans laquelle seule la valeur maximum obtenue est prise en compte.

4. Système selon l'une quelconque des revendications 1 à 3, caractérisé en ce que le moyen (3—8) d'extraction de blocs de lettres comprend le moyen (5) d'extraction de données comportant un détecteur (51) de hauteur moyenne, un multiplicateur (52), un registre (53) de constantes, un registre (50) de la largeur apparaissant le plus fréquemment, et un registre (55) de constante.

5. Système selon l'une quelconque des revendications 1 à 4, caractérisé en ce que le moyen (9) de détection d'intervalles effectifs comprend un compteur (91), un registre de fréquence (92), et un détecteur de zéro (93).

6. Système selon l'une quelconque des revendications 1 à 5, caractérisé en ce que le moyen (11) d'extraction de largeur de blocs de lettres comprend des registres (20, 21, 23, 24, 27), des comparateurs (22, 25), un additionneur (26) et un compteur (28).

7. Système selon l'une quelconque des revendications 1 à 6, caractérisé en ce que le moyen (13) d'estimation du pas des lettres comprend des intégrateurs (31, 35), des additionneurs (32, 36, 37) des diviseurs (33, 38) et une table de coefficients (34).

8. Procédé de détection du pas de lettres pour balayer une série d'images de lettres en alignement sur une surface en papier afin d'extraire un pas de lettres pour séparer la série d'images de lettres en alignement un unités d'une lettre, plus particulièrement avec un système selon l'une quelconque des revendications 1 à 7, caractérisé en ce qu'il comprend les étapes consistant à:

a) produire une image binaire de lettres ayant des bits noirs et blancs par balayage de la série d'images de lettres en alignement;

b) extraire des blocs de lettres qui sont entourés par les bits blancs en réponse à l'image binaire de lettres;

c) engendrer une donnée sur la hauteur et une donnée sur la largeur pour les blocs de lettres en réponse aux blocs de lettres;

d) stocker l'information sur la fréquence par rapport à la donnée sur la largeur;

e) fournir une données sur la hauteur moyenne en réponse à la donnée sur la hauteur;

f) fournir une gamme possible (Al) de la largeur des blocs de lettres dans laquelle une lettre peut exister en réponse à la donnée sur la hauteur moyenne;

g) déterminer des valeurs de limites supérieure et inférieure d'une gamme de largeur (Cs ou Cl) se trouvant à l'intérieur de la gamme possible (Al) du bloc de lettres, par référence à la distribution de l'information sur la fréquence en réponse à l'information stockée sur la fréquence;

h) détecter une série de blocs de lettres qui est considérée comme comprenant une multitude de blocs d'une lettre et d'espacements entre les blocs d'une lettre, en termes de gamme de largeur, et une largeur d'espacement permise déterminée sur la base de la gamme de largeur, la largeur de chacun des blocs de lettres à l'intérieur de la série se trouvant dans la gamme de largeur, la largeur de chacun des espacements à l'intérieur de la série se trouvant à l'intérieur de la largeur d'espacement permise, en obtenant un certain nombre de lettres contenues dans la série de blocs de lettres et en obtenant une somme des largeurs des blocs de lettres et des espacements à l'intérieur de la série de blocs de lettres; et

i) effectuer une estimation de la probabilité maximum d'un pas des lettres à partir de la somme des largeurs et du nombre de lettres, le pas des lettres étant calculé comme la moyenne des pas des lettres de la série des blocs de lettres détectés.

EP 0 120 334 B1

## FIG. 1

$H_1$  $V_1$  $H_2$  $V_2$  $H_3$  $V_3$  $H_4$  $H_5$  $H_6$  $H_7$  $H_9$  $H_8$

$V_4$  $V_{4.5}$  $V_5$  $V_{5.6}$  $V_6$  $V_{6.7}$  $V_7$  $V_{7.8}$  $V_8$  $V_{8.9}$

$V(4)$

## FIG. 2

NUM

$\alpha_1 H_m$   $A1$   $\alpha_2 H_m$

$C_s(L_s, U_s)$

$C_1(L_1, U_1)$

V

FIG. 3

FIG. 4

FIG. 5

F/G. 6